(19) Europäisches Patentamt

European Patent Office

Office européen des brevets

(11) **EP 1 195 668 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(51) Int Cl.⁷: **G05B 23/02**, G05B 19/4065

(21) Anmeldenummer: **00121046.7**

(22) Anmeldetag: **27.09.2000**

(54) **Prozessüberwachung zur Verschleisserkennung an Verzahnungswerkzeugen**

Process monitoring for detecting wear of toothed-tools

Surveillance de processus pour détecter l' usure des outils dentées

(84) Benannte Vertragsstaaten:
**AT BE CH CY DE DK ES FI FR GB GR IE IT LI LU MC NL PT SE**

(43) Veröffentlichungstag der Anmeldung:
**10.04.2002 Patentblatt 2002/15**

(73) Patentinhaber:
• **LIEBHERR-VERZAHNTECHNIK GmbH**
  **87437 Kempten (DE)**
• **Fraunhofer-Gesellschaft zur Förderung der angewandten Forschung e.V.**
  **80686 München (DE)**

(72) Erfinder:
• **Dipl.Ing. Jürgen Schönitz**
  **09117 Chemnitz (DE)**
• **Dr.-Ing. Ulrich Priber**
  **08523 Plauen (DE)**
• **Dipl.-Ing. Jochen Fischer**
  **09125 Chemnitz (DE)**
• **Dr. Gerd Sulzer**
  **87487 Wiggensbach (DE)**
• **Dr. Klaus Finkenwirth**
  **87452 Krugzell (DE)**

(74) Vertreter: **Klunker . Schmitt-Nilson . Hirsch**
  **Winzererstrasse 106**
  **80797 München (DE)**

(56) Entgegenhaltungen:
EP-A- 0 336 477    EP-A- 0 442 020
WO-A-97/25659     US-A- 4 514 797
US-A- 4 849 741    US-A- 5 243 533
US-A- 5 266 929    US-A- 5 319 357

**Beschreibung**

Die Erfindung betrifft ein Verfahren zur prozeßbegleitenden Verschleißerkennung an einem Verzahnungswerkzeug, insbesondere Wälzfräs- und -schleifwerkzeugen, sowie eine Vorrichtung zur Durchführung des Verfahrens.

Die rechtzeitige Erkennung von Werkzeugverschleiß ist von grundsätzlichem Interesse. Dies gilt insbesondere für moderne Wälzfräswerkzeuge zum Trockenfräsen, die vergleichsweise teuer sind und deren Werkzeugstandzeit daher unmittelbar die Produktionskosten beeinflußt. Es ist deshalb wichtig, daß der Zerspanprozeß möglichst verschleißarm abläuft und das Werkzeug zum richtigen Zeitpunkt gewechselt wird, das heißt genau dann, wenn das Nachschärfen des Werkzeugs wirtschaftlich und sinnvoll möglich ist.

Die Werkzeugstandzeit läßt sich gestützt auf statistisch fundierte Aussagen nur ungenau voraussagen. Insbesondere sind nicht alle die Standzeit bestimmenden Einflußgrößen ohne weiteres statistisch erfaßbar. Als kritische Einflußgrößen sind beispielsweise die Hartmetallqualität des Werkzeugs, die Beschichtungsqualität, das Materialgefüge des Werkstückmaterials (Materialeigenschaften, Chargeneinfluß), die Werkzeuggeometrie (Schneidenradius, Freiwinkel, Spanwinkel ...) etc. zu berücksichtigen. Diese verschiedenen Einflußgrößen können gravierende Unterschiede in der Werkzeugstandzeit verursachen. Daher werden in Ergänzung zur theoretischen Abschätzung der Werkzeugstandzeit Prozeßüberwachungssysteme eingesetzt, um den aktuellen Verschleißzustand des Werkzeugs zu ermitteln.

Beispielsweise werden Verschleiß- und Bruchüberwachungssysteme eingesetzt, mit denen einzelne Prozeßparameter überwacht werden, um indirekt eine Verschleißaussage durch Vergleich eines aktuell gemessenen Prozeßwertes mit einem vorgegebenen Grenzwert vornehmen zu können.

Insbesondere ist es bekannt, die Leistungsaufnahme einer Werkzeugmaschine zu überwachen, indem die Differenz zwischen dem Leerlaufstrom und dem aktuellen Wirkstrom erfaßt und dessen Änderung als Verschleißerscheinung gewertet wird. Dieses Meßverfahren hat aber den Nachteil, daß sich der erfaßte Differenzstrom auch schon dann ändert, wenn sich der Leerlaufstrom ändert oder wenn sich der Wirkstrom aufgrund von Umständen ändert, die nicht unmittelbar mit dem Werkzeugverschleiß zusammenhängen. Beispielsweise hängt der Wirkstrom auch von der Motortemperatur und von den Reibverhältnissen im Antriebsstrang ab. Desweiteren stellt sich insbesondere beim Wälzfräsen das zusätzliche Problem, daß durch das Shiften des Werkzeugs immer wieder ein "neues" Werkzeug in Eingriff mit dem Werkstück kommt und daß es außerdem unterschiedliche Prozeßphasen: Anschnitt gefolgt vom Vollschnitt gibt. Beides wirkt sich auf den aktuellen Wirkstrom aus. Um in jedem dieser unterschiedlichen Prozeßzustände eine zuverlässige Verschleißaussage durch Vergleich eines vorgegebenen Grenzwertes mit dem aktuell gemessenen Prozeßwert vornehmen zu können, müssen zuvor entsprechend viele Referenzsignale aufgezeichnet werden. Dies ist in der Praxis jedoch nicht möglich, weshalb die Verschleißinformation dieses Systems insbesondere beim Wälzfräsen nur bedingt brauchbare Ergebnisse liefert. Das gilt in gleichem Maße für Überwachungssysteme, die eine Verschleißaussage auf einen anderen Prozeßparameter als den Stromverbrauch gründen.

Es ist auch bekannt, zwei unterschiedliche Prozeßparameter gleichzeitig zu überwachen. Dadurch können kritische Prozeßzustände wesentlich sicherer erkannt und unnötige Fehlabschaltungen vermieden werden (VDI-Z 135 (1999) "Intelligente Werkzeugmaschinen für die Produktion 2000"). Es ist weiterhin bekannt, anhand der Trendentwicklung der gemessenen Prozeßwerte auf den aktuellen Verschleißzustand zu schließen (Nordmann GmbH & Co. KG, "TOOL MONITOR SEM-68000", Stand 20.03.1997). Problematisch ist aber, daß der Trend der Prozeßwerte nicht notwendigerweise proportional zum Verschleißfortschritt verläuft. Je nach überwachtem Prozeßparameter kann der zugehörige Prozeßwerttrend einen völlig anderen Verlauf haben. Es wurde daher vorgeschlagen, die Prozeßwerte von zwei Prozeßparametern und ihre zugehörigen tatsächlichen Verschleißwerte in einer Matrix zusammenzufassen, die jeder möglichen Prozeßwertkombination einen gemeinsamen Verschleißwert zuordnet (sogenanntes "weights file"). Für jeden Werkstück- und Werkzeugtyp werden separate weights files angelegt und gespeichert. Durch neuronale Netzwerktechnik wird erreicht, daß sich das System selbständig optimiert (DI Diagnostic Instruments, Application Note Nr. 95/07/02 "Tool Wear Monitoring With Tool Check®").

Problematisch stellt sich dabei aber die mangelnde Übertragbarkeit des Verfahrens von einem Bearbeitungsprozeß auf einen anderen Bearbeitungsprozeß dar. Denn je nach Werkstücktyp und Werkzeugtyp oder im Falle sich ändernder Einflußgrößen (Schnittgeschwindigkeit, Schnittiefe, etc.) müssen neue weights files angelegt werden und das System vollständig neu angelernt werden.

Der Erfindung liegt daher die Aufgabe zugrunde, ein Verfahren und eine Vorrichtung zur prozeßbegleitenden Überwachung des Verschleißzustands und insbesondere des Verschleißfortschritts eines Verzahnungswerkzeugs zu schaffen, welches zuverlässige Ergebnisse liefert und ohne größeren Aufwand an unterschiedliche Verzahnungsprozesse angepaßt werden kann.

Diese Aufgabe wird erfindungsgemäß durch ein Verfahren und eine Vorrichtung mit den Merkmalen der unabhängigen Patentansprüche 1 und 24 gelöst. In davon abhängigen Ansprüchen sind vorteilhafte Ausgestaltungen der Erfindung angegeben.

Die Erfindung geht von folgenden Prämissen aus, die jedenfalls für vergleichbare Verzahnungsprozesse in etwa zutreffen:

A) Der für ein stumpfes Werkzeug gemessene Prozeßwert steht zu dem für ein scharfes Werkzeug gemessenen Prozeßwert in etwa in einem festen Verhältnis. Wird beispielsweise als Prozeßparameter die Temperaturdifferenz des Werkstücks vor und nach seiner Bearbeitung überwacht und liegt diese bei Verwendung eines scharfen Werkzeugs bei 20K und bei Verwendung eines stumpfen Werkzeugs bei 40K, so ist zu erwarten, daß bei einem ähnlichen Verzahnungsprozeß an einem anderen Werkstück, bei dem die für ein scharfes Werkzeug gemessene Temperaturdifferenz 25K beträgt, die Temperaturdifferenz auf etwa 50K steigen wird, bis das Werkzeug stumpf ist. Das Verhältnis von "stumpf" zu "scharf" beträgt also in beiden Fällen etwa 2:1.

Erfindungsgemäß werden daher die aktuell erfaßten Prozeßwerte "normiert", indem sie mit einem Referenzprozeßwert in Beziehung gesetzt werden, der für ein scharfes Werkzeug an demselben Werkstück gemessen wurde. Der aktuell erfaßte Prozeßwert kann dann als prozentuale Abweichung zum zugehörigen Referenzprozeßwert für ein scharfes Werkzeug dargestellt werden. Dadurch lassen sich ähnliche Verzahnungsprozesse miteinander vergleichen, so daß bei einer Anpassung des Verfahrens auf einen neuen Verzahnungsprozeß lediglich der Referenzwert für den Scharfzustand des Werkzeugs ermittelt werden muß. Dies kann zu Beginn des neuen Verzahnungsprozesses an dem zu überwachenden Werkzeug selbst erfolgen, ohne daß hierzu Zeit zur Anpassung des Verfahrens verloren geht.

B) Als zweite Prämisse wird davon ausgegangen, daß sich der Verschleißfortschritt für vergleichbare Verzahnungsprozesse ähnlich entwickelt. Steigt beispielsweise der Werkzeugverschleiß zu Beginn des Verzahnungsprozesses stark an und geht dann in einen proportionalen und schließlich in einen überproportionalen Verschleißfortschritt über, so wird angenommen, daß diese typische Verschleißkurve für vergleichbare Verzahnungsprozesse ähnlich verläuft.

Bei der zuvor beschriebenen typischen Verschleißkurve ist es zweckmäßig, das Werkzeug nachzuschärfen, wenn es in die Phase des überproportionalen Verschleißfortschritts eingetreten ist, da in dieser Phase schnell der Stumpfzustand des Werkzeugs erreicht und ein wirtschaftliches Nachschärfen nicht mehr möglich ist.

Erfindungsgemäß werden die tatsächlich erfaßten Prozeßwerte daher entsprechend "gewichtet", um aus den Prozeßwerten eine Verschleißkennwertkurve zu entwickeln, die die Merkmale des tatsächlichen zeitlichen Verlaufs des Verschleißfortschritts deutlich werden läßt, die also insbesondere erkennen läßt, wann das Werkzeug in die Phase des überproportionalen Verschleißfortschritts eintritt.

Dies soll nachfolgend an einem Extrembeispiel kurz erläutert werden: nimmt beispielsweise die zuvor erwähnte Temperaturdifferenz mit zunehmender Werkzeugstandzeit proportional zu, der Werkzeugverschleiß steigt aber in derselben Zeit zunächst proportional und dann überproportional, so werden die aktuell erfaßten Temperaturdifferenzwerte so gewichtet, daß der Übergang von proportionalem zu überproportionalem Verschleißfortschritt klar erkennbar wird.

Gemäß der eingangs genannten zweiten Prämisse kann die Gewichtung durch Korrelation der Temperaturdifferenz mit einer Zugehörigkeitsfunktion erfolgen, die in einer Anlernphase für einen speziellen Verzahnungsprozeß ermittelt und für nachfolgende ähnliche Verzahnungsprozesse, auf die das Verfahren übertragen werden soll, übernommen werden kann. Eine zeitaufwendige Anpassung des Verfahrens an einen neuen, vergleichbaren Verzahnungsprozeß ist somit nicht erforderlich.

C) Schließlich basiert die Erfindung auf der dritten Prämisse, daß eine Verschleißaussage, die auf mehrere überwachte Prozeßparameter gründet, zuverlässiger ist, als eine nur auf einen Prozeßparameter gestützte Verschleißaussage. Verschleißunabhängige Streugrößen, wie beispielsweise ein sich ändernder Leerlaufstrom, werden dadurch weitgehend kompensiert. Dieser an sich auf der Hand liegende Vorteil einer aggregierten Verschleißaussage kann aber erst durch die zuvor genannten Maßnahmen des Normierens und Gewichtens technisch umgesetzt werden. Denn die normierten und gewichteten Werte lassen sich zu einer aussagefähigen aggregierten Verschleißaussage zusammenfassen.

Durch geeignete Gewichtung und Korrelation, beispielsweise mittels den Methoden der Fuzzy-Logic, läßt sich aus den für jeden überwachten Prozeßparameter ermittelten Verschleißkennwerten zu jedem Zeitpunkt ein gemeinsamer Verschleißkennwert ableiten, anhand dessen die Entscheidung getroffen wird, daß das Werkzeug zum Nachschärfen gewechselt werden soll. Dies kann bei Erreichen einer vorgegebenen Verschleißkennwertgrenze oder abhängig vom Gradienten des Verlaufs des gemeinsamen Verschleißkennwerts erfolgen.

Die Art und Weise des Normierens der aktuell erfaßten Prozeßwerte, des Gewichtens der normierten Werte und des Ableitens eines gemeinsamen aktuellen Verschleißkennwerts wird nachfolgend am Beispiel der Verschleißüberwachung von Wälzfräswerkzeugen erläutert, wobei sich besondere Vorteile und Merkmale aus der nachfolgenden Beschreibung ergeben. Die Erfindung ist aber nicht auf die Überwachung solcher Verzahnungswerkzeuge beschränkt, sondern kann auch auf andere Verzahnungsfräser und auf Wälzschleifwerkzeuge angewendet werden. Desweiteren ist die Erfindung nicht darauf beschränkt, die Prozeßwerte im Wege der Fuzzy-Klassifikation zu gewichten und zu korrelieren. Auch eine Realisierung mittels neuronalen Netzen oder anderen, ähnlich leistungsfähigen Verfahren ist möglich.

Nachfolgend wird die Erfindung anhand der begleitenden Zeichnungen beispielhaft erläutert. Darin zeigen:

Figur 1    die zeitliche Entwicklung der Verschleißmarkenbreite VB an einem Wälzfräser,

Figur 2    unterschiedliche Zugehörigkeitsfunktionen zur Gewichtung der für verschiedene Prozeßparameter erfaßten Prozeßwerte,

Figur 3    die einzelnen Verfahrensschritte, um aus den für verschiedene Prozeßparameter erfaßten Prozeßwerten einen gemeinsamen aktuellen Verschleißkennwert abzuleiten,

Figur 4    schematisch eine Wälzfräsmaschine gemäß der vorliegenden Erfindung und

Figur 5    schematisch die Bestandteile einer Meßwertaquisitions und verarbeitungseinheit.

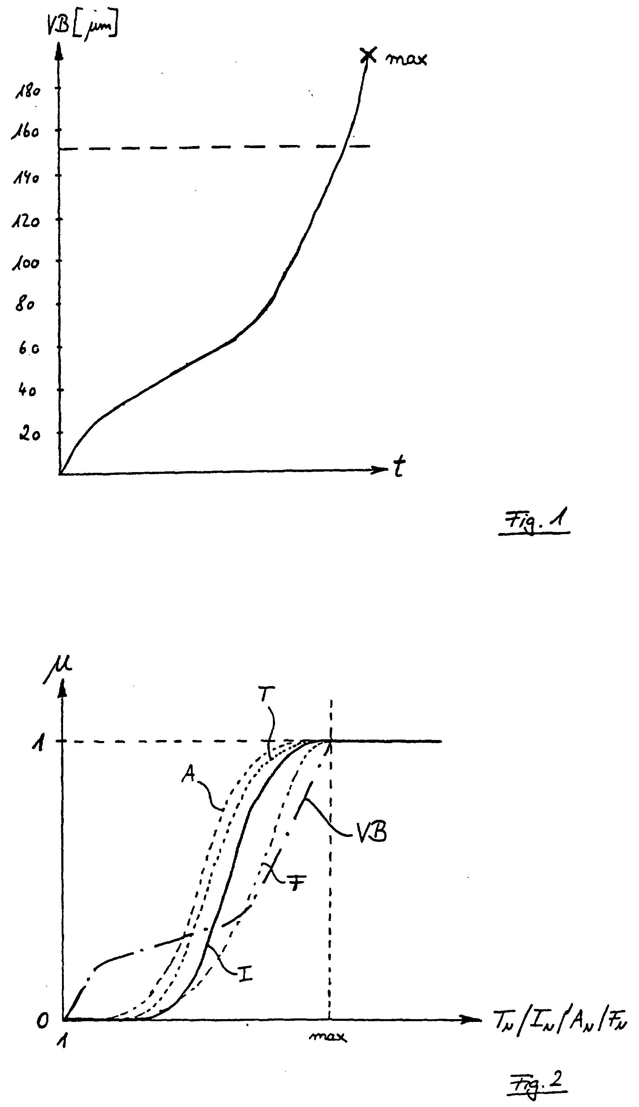

In Figur 1 ist der typische Verschleißverlauf (Verschleißfortschrittkurve) eines Wälzfräsers dargestellt. Der Verschleiß wird bestimmt durch die am Wälzfräser gemessene Verschleißmarkenbreite VB. Typischerweise entwickelt sich der Verschleiß nach einer kurzen Einlaufphase bis circa 80 µm annähernd proportional und anschließend überproportional. In der Phase des überproportionalen Verschleißfortschritts besteht für den Fräser das größte Risiko der Überlastung. Bei einer Verschleißmarkenbreite von 150 µm sollte das Werkzeug daher spätestens nachgeschärft werden. Das Ende der Kurve wird durch den Werkzeugbruch als Verschleißgrenze "max" markiert. Der Verschleißmarkenbreitenverlauf ist idealisiert als Mittelwert aus mehreren Meßergebnissen dargestellt und kann selbst für Werkzeuge des selben Werkzeugtyps mehr oder weniger stark von dieser idealisierten Kurve abweichen, wobei jedoch in der Regel jeweils eine proportionale und eine überproportionale Verschleißfortschrittphase erkennbar sind.

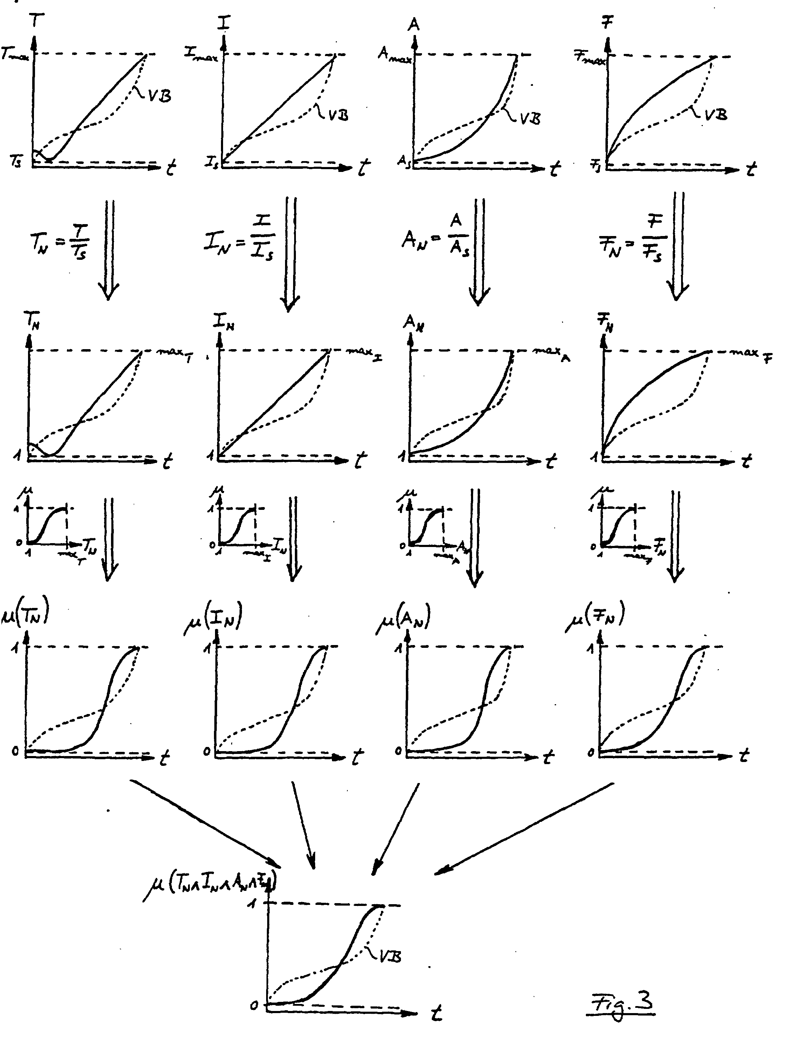

In Figur 3 ist dargestellt, wie für vier überwachte Prozeßparameter eine einzige, gemeinsame Verschleißkennwertkurve abgeleitet wird. Als Prozeßparameter werden überwacht: Werkstücktemperatur T, Motorstrom I, Körperschall A und die Kraft F am Werkstücklager der Werkzeugmaschine.

Die Diagramme in der ersten Zeile der Figur 3 zeigen lediglich beispielhaft, wie sich die Prozeßwerte der zuvor genannten Prozeßparamter zeitlich verändern. Ausgehend von einem Startwert steigen die Prozeßwerte auf einen Maximalwert "max", der die Verschleißgrenze markiert, an. Man erkennt, daß sich die Prozeßwerte der einzelnen Prozeßparameter zeitlich unterschiedlich entwickeln, das heißt, unterschiedliche Prozeßwertkurven bilden. Zum Vergleich ist jeweils strichliniert die anhand von Figur 1 erläuterte typische Verschleißfortschrittkurve VB dargestellt. Man erkennt, daß die Verschleißfortschrittkurve nicht notwendigerweise mit den jeweiligen Prozeßwertkurven übereinstimmt.

In einer Anlernphase werden zunächst die Verschleißfortschrittkurve und die zugehörigen Prozeßwertkurven als Mittelwert aus mehreren gleichen Werkzeugen erhalten. Das heißt, die Werkzeuge werden jeweils bis zu ihrer Verschleißgrenze "max" eingesetzt und währenddessen wird von Zeit zu Zeit der Verschleiß anhand der Verschleißmarkenbreite sowie die jeweils aktuellen Prozeßwerte zu den einzelnen Prozeßparametern T, I, A, F erfaßt. Dadurch ergeben sich die in der ersten Zeile der Figur 3 dargestellten Mittelwertkurven. Die Werte $T_S$, $I_S$, $A_S$, $F_S$ bezeichnen dabei einen Prozeßwert für ein scharfes Werkzeug und die Werte $T_{max}$, $I_{max}$, $A_{max}$, $F_{max}$ bezeichnen die jeweiligen Prozeßwerte für die Verschleißgrenze des Werkzeugs.

Je nach Werkzeug und Werkstück kann es sinnvoll sein, andere Prozeßparameter als die vorgenannten zu überwachen. Insbesondere aber bei der Verschleißüberwachung von Wälzfräsern haben sich diese Prozeßparameter als sehr aussagekräftig erwiesen. Konkret werden die zu den vorgenannten Prozeßparametern zugehörigen Prozeßwerte wie folgt erfaßt:

Werkstücktemperatur

Der Prozeßparameter "Werkstücktemperatur" (T) ist definiert als Temperaturdifferenz des Werkstücks vor und nach seiner Bearbeitung, wobei die Temperatur vorzugsweise berührungslos erfaßt wird, beispielsweise mittels einem Pyrometer.

Motorstrom

Der Prozeßparameter "Motorstrom" (I) ist definiert als Stromdifferenz des Leerlaufstroms und des aktuellen Wirkstroms und ist ein Maß für die im Verzahnungsprozeß verbrauchte Energie. Prozeßwerte zu diesem Prozeßparameter werden nur erfaßt, wenn der Wälzfräser im Vollschnitt arbeitet, denn in der Anschnittphase steigt die Wirkleistung kontinuierlich an und fällt beim Fräseraustritt wieder ab.

Körperschall und Kraft am Werkstücklager

Im Gegensatz zu den Prozeßparametern "Temperatur" (T) und "Motorstrom" (I), bei denen im wesentlichen statische Größen erfaßt werden, werden die Prozeßparameter "Körperschall" (A) und "Kraft" (F) dynamisch erfaßt. Das heißt, Körperschallprozeßwerte werden als Schwingungen am Gegenhaltearm mittels einem Beschleunigungsaufnehmer erfaßt. Aber auch die Kraft, die sich als dynamische Dehnung am Gegenhaltearm bemerkbar macht, wird mittels einem Dehnungsmesser erfaßt. Beschleunigungsund Dehnungsmesser sind als Piezoelemente ausgebildet.

Sowohl die Körperschallschwingungen als auch die Dehnungsschwingungen bilden ein Feld von einander überlagernden inhomogenen Schwingungen. Aus diesem Schwingungsfeld werden lediglich diejenigen Schwingungen herausgefiltert, die für den Wälzfräsprozeß charakteristisch sind. Das heißt, es wird lediglich ein spektraler Schmalbandanteil berücksichtigt, dessen Mittenfrequenz der Stolleneingriffsfrequenz des Wälzfräsers oder einem harmonischen Vielfachen davon entspricht, und über eine festgelegte Zeitspanne z.B. des Vollschnitts wird der Effektivwert (RMS-Wert) dieses spektralen Schmalbandanteils gemittelt, um den aktuellen Prozeßwert zu erhalten. Es können auch mehrere, beispielsweise die ersten fünf harmonischen Vielfachen der Stolleneingriffsfrequenz ausgefiltert und jeweils der Effektivwert gemittelt werden, um fünf voneinander unabhängige Prozeßwerte zu erhalten, die alle zur Ableitung eines gemeinsamen aktuellen Verschleißkennwertes herangezogen werden können.

Die Stolleneingriffsfrequenz SF ergibt sich in einfacher Weise aus dem Produkt der Stollenzahl S mit der Drehzahl n des Verzahnungsfräswerkzeugs zu

$$SF = S \times n.$$

Die Stolleneingriffsfrequenz SF ist somit eine systemimmanente Betriebsgröße, die ohne Aufwand zur Auswertung der Schwingungssignale herangezogen werden kann. Als besonders geeignet hat sich die Auswertung des spektralen Schmalbandanteils erwiesen, dessen Mittenfrequenz der dreifachen Stolleneingriffsfrequenz des Werkzeugs entspricht.

Die auf die zuvor beschriebene Weise für die Prozeßparameter "Werkstücktemperatur", "Motorstrom", "Körperschall" und "Kraft" (Dehnung) ermittelten Prozeßwerte können dann beispielsweise den in der ersten Zeile der Figur 3 dargestellten zeitlichen Verlauf nehmen, wie er in der Anlernphase über mehrere gleiche Werkzeuge gemittelt wurde.

Es wird nun davon ausgegangen, daß für vergleichbare Verzahnungsprozesse die zu einem bestimmten Prozeßparameter gemittelten Prozeßwertkurven vergleichbar sind und daß dann insbesondere das Verhältnis zwischen dem Prozeßwert für ein stumpfes Werkzeug und dem Prozeßwert für ein scharfes Werkzeug in etwa gleich ist, daß also beispielsweise gilt:

$$T_{max} / T_S = \text{Konstant.}$$

Aufgrund dieser Überlegung können die jeweils aktuell ermittelten Prozeßwerte "normiert" werden, indem sie zu dem jeweiligen Prozeßwert für ein scharfes Werkzeug in Beziehung gesetzt werden, nämlich

$$T_N = T/T_S; \; I_N = I/I_S; \; A_N = A/A_S; \; F_N = F/F_S.$$

Diese Normierung gestattet es, die in der Anlernphase aufgestellten gemittelten Prozeßwertkurven auf vergleichbare Prozesse zu übertragen, bei denen beispielsweise derselbe Werkzeugtyp zur Herstellung eines etwas anders geformten Werkstücks verwendet werden soll. Die Anlernphase erübrigt sich dann bei den vergleichbaren Prozessen, da davon ausgegangen werden kann, daß der Verlauf des Verschleißfortschritts sowie der normierte zeitliche Verlauf der Prozeßwerte für vergleichbare Prozesse in etwa übereinstimmen.

Der normierte zeitliche Verlauf der Prozeßwerte ist in Figur 3 in den Diagrammen der zweiten Zeile dargestellt. Der normierte Wert $T_N$, $I_N$, $A_N$, $F_N$ für ein "scharfes" Werkzeug beträgt jeweils 1, wohingegen die mit $max_T$, $max_I$, $max_A$, $max_F$ gekennzeichnete normierten Werte für ein Werkzeug an der Verschleißgrenze jeweils unterschiedlich sein können, beispielsweise 1,2, 2,5, 1,4, 3,7. Ein normierter aktuell gemessener Prozeßwert läßt sich somit immer als prozentuale Abweichung vom Scharfzustand "1" angeben (20%, 150%, 40%, 270%).

Wie den Diagrammen der zweiten Zeile in Figur 3 zu entnehmen ist, hat die Normierung auf den Verlauf der Prozeßwertkurven keinerlei Einfluß. Allerdings sind die normierten Prozeßwertkurven nach wie vor je nach überwachtem Prozeßparameter unterschiedlich und können nicht ohne weiteres miteinander verglichen werden. Um nun diese unterschiedlichen Prozeßwertkurven miteinander korrelieren zu können, werden sie zunächst "gewichtet".

Die Gewichtung der Prozeßwerte und die anschließende Ableitung eines gemeinsamen Verschleißkennwertes erfolgt durch Fuzzy-Klassifizierung. Das heißt, um die aktuell ermittelten Prozeßwerte derunterschiedlichen Prozeßparameter miteinander vergleichen zu können, wird zunächst jedem Prozeßwert ein individueller Verschleißkennwert zugeordnet, der zwischen 0 und 1 liegt. Dem für ein scharfes Werkzeug ermittelten Prozeßwert wird der individuelle Verschleißkennwert 0 und dem für ein stumpfes Werkzeug ermittelten Prozeßwert der Verschleißkennwert 1 zugeordnet. Dazwischenliegende Prozeßwerte werden gemäß einer Glockenkurve gewichtet, wie sie in Figur 3 in den kleinen Diagrammen neben den Pfeilen dargestellt ist. Diese Glockenkurven werden als Zugehörigkeitsfunktion $\mu(T_N)$, $\mu(I_N)$, $\mu(A_N)$, $\mu(F_N)$ des Fuzzy-Klassifikationssystems bezeichnet. Das heißt, jedem Prozeßwert wird ein Verschleißkennwert zugeordnet, der auf der jeweiligen Glockenkurve liegt.

Die Zugehörigkeitsfunktion bzw. Glockenkurve wird je nach dem zu überwachenden Prozeßparameter abhängig von dessen typischer individueller Prozeßwertkurve individuell aufgestellt, so daß die aus der Gewichtung resultierenden Verschleißkennwertkurven identisch und somit vergleichbar sind. In Figur 2 ist dies beispielhaft dargestellt. Die durchgezogene Linie gibt die Zugehörigkeitsfunktion für einen Prozeßparameter an, dessen Prozeßwerte mit der Zeit linear zunehmen, in Figur 3 also beispielsweise für die Prozeßwerte des Prozeßparameters I (Motorstrom). Die Zugehörigkeitsfunktionen (Glockenkurven) für die anderen Prozeßparameter T, A, F sind entsprechend nach links oder rechts verschoben, um den Verläufen ihrer individuellen Prozeßwertkurven gerecht zu werden. Eine Gewichtung der normierten Prozeßwertkurven (Zeile 2 in Figur 3) mittels diesen individuellen Zugehörigkeitsfunktionen führt dann zu identischen Verschleißkennwertkurven, wie in Figur 3, Zeile 3 dargestellt. Das heißt, die Schlußfolgerung, ob ein Werkzeug nachzuschärfen ist, würde unabhängig davon, welche individuelle Verschleißkennwertkurve betrachtet wird, zur selben Zeit getroffen.

Die bisher erläuterte Anlernphase einschließlich der Ermittlung der typischen Verschleißfortschrittkurve und Prozeßwertkurven dient dazu, für jeden überwachten Prozeßparameter eine individuelle Zugehörigkeitsfunktion aufzustellen, mit denen die individuellen Prozeßwerte vergleichbar und das Verschleißüberwachungsverfahren auf vergleichbare Verzahnungsprozesse übertragbar gemacht werden können.

Die in den Zeilen 1 bis 3 der Figur 3 dargestellten Diagramme zeigen nur die gemittelten Kurven aus der Anlernphase, mit denen die während eines Überwachungsprozesses tatsächlich erfaßten aktuellen Verschleißkennwertkurven $\mu(T_N)$, $\mu(I_N)$, $\mu(A_N)$, $\mu(F_N)$ nur im Idealfall übereinstimmen. Die aktuell im Überwachungsprozeß erfaßten Prozeßwerte liegen vielmehr je nach überwachtem Prozeßparameter teilweise über und unter dem gemittelten Wert der Anlernphase. Das heißt, die während eines Überwachungsprozesses mittels der individuellen Zugehörigkeitsfunktionen (Glockenkurven) erhaltenen, individuellen Verschleißkennwertkurven (Zeile 3 der Figur 3) weichen voneinander ab und die Aussage, ob das Werkzeug gewechselt werden muß, würde je nach Verschleißkennwertkurve zu einem anderen Zeitpunkt getroffen. Aus diesem Grunde wird .. für die Verschleißüberwachung nicht nur ein Prozeßparameter, sondern es werden vier Prozeßparameter berücksichtigt, die normiert, gewichtet und schließlich zu einem gemeinsamen Verschleißkennwert $\mu(T_N \wedge I_N \wedge A_N \wedge F_N)$ zusammengefaßt werden. Es ergibt sich dann ein gemeinsamer Verschleißkennwertverlauf wie in Figur 3 unten dargestellt.

Vorzugsweise wird der gemeinsame aktuelle Verschleißkennwert aus den individuellen Verschleißkennwerten wie folgt abgeleitet:

$$\mu\left(m_1 \wedge m_2 \wedge \ldots \wedge m_k\right) = \frac{1}{1 + \dfrac{1}{k} \displaystyle\sum_{i=1}^{k} \dfrac{1 - \mu(m_i)}{\mu(m_i)}}$$

Bei dieser Beziehung handelt es sich um eine modifizierte Version der fuzzy-logischen Hamacher-Konjunktion, bei der die Summe der Abstände d vom Zentrum $d = (1-\mu(m_i))/\mu(m_i)$ über die Anzahl k der berücksichtigten Prozeßparameter gemittelt wird. Durch die Mittelwertbildung wird erreicht, daß der Einfluß einzelner Prozeßwerte, die außergewöhnlich stark von den übrigen Prozeßwerten abweichen (Ausreißer), relativiert und eine Überreaktion des Systems aufgrund solcher Ausreißer vermieden wird.

Der zeitliche Verlauf des gemeinsamen Verschleißkennwerts, der durch Normierung, Gewichtung mittels individueller Zugehörigkeitsfunktion und Korrelierung der während der Prozeßüberwachung aktuell erfaßten Prozeßwerte erhalten wird, wird dem Maschinenbediener als Verschleißkennwertkurve, wie unten in Figur 3 dargestellt, angezeigt. Wenn der gemeinsame Verschleißkennwert z.B. den Wert $\mu = 0{,}5$ erreicht, wird der Maschinenbediener das Werkzeug wechseln, da dies in etwa mit dem Zeitpunkt zusammenfällt, an welchem der proportionale Verschleißfortschritt in den überproportionalen Verschleißfortschritt übergeht. (Dies ist der Anschaulichkeit halber in dem untersten Diagramm von Figur 3 durch die gestrichelte Kurve VB dargestellt.) Durch die Gewichtung der Prozeßwerte mittels der Glockenkurve wird dieser Übergang von der proportionalen Verschleißphase zu der überproportionalen Verschleißphase für den Maschinenbediener sehr gut erkennbar. Er kann sich daher bei seiner Entscheidung, das Werkzeug zu wechseln, entweder an der Steigung der Kurve des gemeinsamen Verschleißkennwerts orientieren oder aber einfach an einer absoluten Verschleißkennwertgrenze, wie beispielsweise $\mu = 0{,}5$.

Damit die Verschleißkennwertkurve gleichmäßig verläuft und nicht durch stochastische Störeinflüsse ständig nach oben und unten abweicht, werden die Prozeßwerte vor ihrer Normierung "geglättet", indem ein Mittelwert aus dem aktuell erfaßten Prozeßwert und einer bestimmten Anzahl zuvor für den selben Prozeßparameter ermittelter Prozeßwerte gebildet wird. Starke Änderungen von Einzelwerten wirken sich so auf die Verschleißkennwertkurve nur geringfügig aus. Das heißt, die so bereinigten Verschleißkennwerte steigen nur allmählich an.

Für den Fall der Überwachung eines Wälzfräsers ergibt sich das besondere Problem, daß durch das Shiften des Wälzfräsers, bei dem der Fräser pro Werkstück um einen kleinen Betrag weiter-geshiftet wird, mit jedem Shiften ein "neues" Werkzeug zum Einsatz kommt. Bei Wälzfräsern wird daher zur Glättung des aktuell erfaßten Prozeßwertes ein Mittelwert aus allen über eine gesamte Shiftperiode hinweg erfaßten Prozeßwerten gebildet. Das bedeutet, daß jede Schneide des Wälzfräsers einen Beitrag zu dem aktuellen Prozeßwert liefert, was im Falle eines gleichmäßigen Verschleißverlaufs, von dem man ausgeht, unproblematisch ist. Andererseits wird eine einzelne stumpfe oder gebrochene Schneide nicht erfaßt, weil sie im Mittelwert untergeht. Der Werkzeugbruch wird daher unabhängig von dem erfindungsgemäßen Verfahren separat mit herkömmlichen Mitteln erfaßt, beispielsweise durch Auswertung des Motorstroms.

Das Glättungsverfahren sieht desweiteren vor, daß Prozeßwerte, die extrem von dem Mittelwert abweichen, auf eine nur 20%-ige Abweichung begrenzt werden, um zu vermeiden, daß sich die Verschleißkennwertkurve aufgrund einzelner extremer Ausreißer verbiegt. Handelt es sich aber nicht um einen Ausreißer, sondern bleibt der betreffende Prozeßwert über längere Zeit auf dem extremen Wert, so reicht die Begrenzung des Extremwerts auf eine 20%-ige Abweichung aus, um die Verschleißkennwertkurve merklich steigen zu lassen.

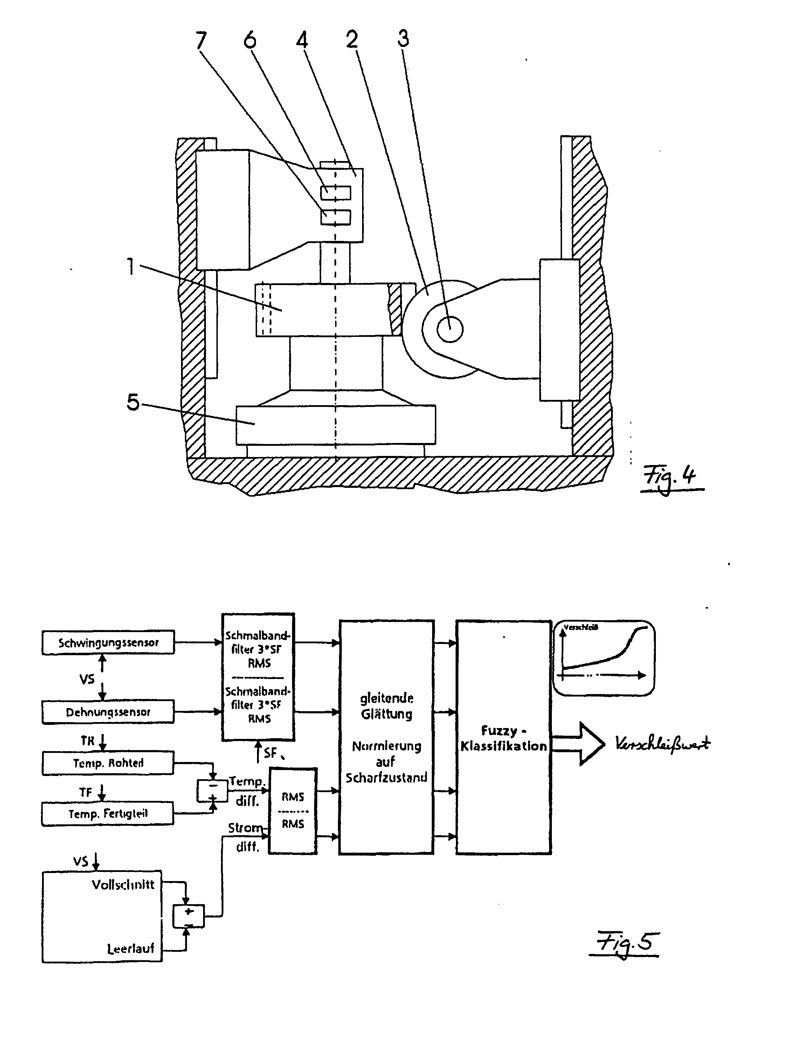

In Figur 4 ist nun eine Wälzfräsmaschine schematisch dargestellt, in der ein zu verzahnendes Werkstück 1 auf einem Werkstückträger 5 mittels einem Gegenhalter 4 fixiert ist und mit einem durch einen Antrieb 3 angetriebenen Wälzfräser 2 bearbeitet wird. An dem Gegenhalter 4 ist ein Sensor 6 zur Erfassung von Körperschwingungen, das ist der Körperschall, und ein Sensor 7, zum Erfassen von Dehnungen angebracht. Die Sensoren 6 und 7 können auch an anderen Stellen der Wälzfräsmaschine, beispielsweise am Werkstückträger 5 angeordnet sein. Die Signale des Körperschwingungssensors 6 und des Dehnungssensors 7 werden mit einem Analog-Digitalwandler über einen kurzen Zeitabschnitt während des Vollschnitts, in dem sich der Wälzfräser 2 in vollem Eingriff mit dem Werkstück 1 befindet, aufgezeichnet und einem nicht dargestellten Meßwertaquisitions- und -verarbeitungsgerät (Datenverarbeitungsvorrichtung), das nachfolgend noch anhand der Figur 5 erläutert wird, zugeführt. Desweiteren weist die Wälzfräsmaschine gemäß Figur 4 einen Sensor zur Messung des Motorstroms sowie eine Pyrometeranordnung zur berührungslosen Messung der Werkstücktemperatur vor und nach der Bearbeitung des Werkstücks auf. Die Motorstrom- und Temperatursensoren sind in Figur 4 nicht speziell dargestellt.

Figur 5 zeigt schematisch die Bestandteile der Meßwertaquisitions- und - verarbeitungseinheit. Das Meßwertaquisitions- und -verarbeitungsgerät ist mit der Maschinensteuerung verbunden und erhält von dieser Informationen über den Zeitpunkt der Bereitstellung des Rohlings und der Ablage des Fertigteils. Anhand dieser Information werden die Temperaturen des Rohlings TR und des Fertigteils TF zum richtigen Zeitpunkt bestimmt und die Temperaturdifferenz ermittelt. Desweiteren erhält das Gerät Informationen über den Vollschnittbeginn VS als Startzeit für die Erfassung sowohl des Wirkstroms als auch der Körper- und Dehnungsschwingungen. Schließlich erhält das Gerät noch Informationen über die Stolleneingriffsfrequenz SF, die sich in einfacher Weise aus dem Produkt der Stollenzahl S und der Drehzahl n des Wälzfräsers zu SF = S x n ergibt. Die Information über die Stolleneingriffsfrequenz SF ist erforderlich, um aus den gemessenen Schwingungen einen spezifischen spektralen Schmalbandanteil ausfiltern zu können, dessen Mittenfrequenz der Stolleneingriffsfrequenz SF oder einem harmonischen Vielfachen derselben entspricht.

In dem in Figur 5 dargestellten Ausführungsbeispiel wird sowohl für die Körperschallschwingungen als auch für die Dehnungsschwingungen mittels einem Schmalbandfilter jeweils lediglich der spektrale Schmalbandanteil berücksichtigt, dessen Mittenfrequenz der dreifachen Stolleneingriffsfrequenz SF des Werkzeugs entspricht. Daraus wird der zugehörige Effektivwert über eine festgelegte Zeit des Vollschnittes gemittelt, der anschließend, wie zuvor erläutert, geglättet und auf den Scharfzustand normiert wird. Auch zu der aus Rohteiltemperatur und Fertigteiltemperatur gebildeten Temperaturdifferenz und zu der aus dem Wirkstrom und dem Leerlaufstrom gebildeten Stromdifferenz werden jeweils die Effektivwerte gebildet, die ebenfalls geglättet und normiert werden.

Die geglätteten und normierten Werte werden in einer Fuzzy-Klassifikation zunächst je für sich mittels der in der Anlernphase für jeden Prozeßparameter individuell aufgestellten Zugehörigkeitsfunktion gewichtet, um individuelle Verschleißkennwerte zwischen "0" und "1" zu erhalten, die durch geeignete mathematische Korrelation zu einem gemeinsamen Verschleißkennwert zusammengefaßt werden. Der Verlauf des gemeinsamen Verschleißkennwerts wird dem Maschinenbediener auf einem Monitor als Kurve angezeigt. Dieser gemeinsame Verschleißkennwert liegt ebenfalls zwischen den Extremen "0" und "1", wobei "0" für ein scharfes und "1" für ein stumpfes Werkzeug steht. Der Maschinenbediener kann dann aufgrund seiner eigenen Erfahrung entscheiden, bei welchem Verschleißkennwert, beispielsweise bei 0,5, er das Werkzeug zum Nachschärfen austauscht.

**Patentansprüche**

1.  Verfahren zur prozeßbegleitenden Verschleißerkennung an einem Verzahnungswerkzeug, umfassend die folgenden Schritte:

    -   Überwachen einer Gruppe von mindestens zwei Prozeßparametern eines Verzahnungsprozesses,
    -   Erfassen mindestens eines aktuellen Prozeßwertes zu jedem Prozeßparameter dieser Prozeßparametergruppe,
    -   Normieren der aktuell erfaßten Prozeßwerte, indem jeder aktuell erfaßte Prozeßwert zu einem Referenzprozeßwert in Beziehung gesetzt wird, der zu dem jeweils überwachten Prozeßparameter für ein scharfes Werkzeug erfaßt wurde,
    -   Gewichtung der normierten, aktuell erfaßten Prozeßwerte, um zu jedem überwachten Prozeßwert einen individuellen, aktuellen Verschleißkennwert zu erhalten, der auf den Werkzeugverschleiß schließen läßt,
    -   Ableiten eines gemeinsamen aktuellen Verschleißkennwertes für die Prozeßparametergruppe unter Verwendung der individuellen aktuellen Verschleißkennwerte.

2.  Verfahren nach Anspruch 1, **gekennzeichnet durch** den weiteren Schritt des Aufzeichnens der zeitlichen Entwicklung des gemeinsamen aktuellen Verschleißkennwertes als Verschleißkennwertkurve.

3.  Verfahren nach Anspruch 1 oder 2, **gekennzeichnet durch** den weiteren Schritt des Detektierens des Standzeitendes des Verzahnungswerkzeugs, wenn der gemeinsame aktuelle Verschleißwert jenseits einem vorgegebenen Schwellenwert liegt.

4.  Verfahren nach Anspruch 2, **gekennzeichnet durch** den weiteren Schritt des Detektierens des Standzeitendes anhand des Gradienten der Verschleißkennwertkurve.

5.  Verfahren nach einem der Ansprüche 1 bis 4, **dadurch gekennzeichnet, daß** die mindestens zwei überwachten Prozeßparameter ausgewählt sind aus der Gruppe folgender vier besonderer Prozeßparameter: Temperaturerwärmung, Körperschall, Dehnung von Bauteilen im Kraftfluß, Wirkleistung an der Werkzeugspindel.

6.  Verfahren nach Anspruch 5, **dadurch gekennzeichnet, daß** als einer der mindestens zwei Prozeßparameter die Temperaturerwärmung des Werkstücks als Differenz zwischen Werkstücktemperatur vor und nach der Bearbeitung überwacht wird.

7.  Verfahren nach Anspruch 5, **dadurch gekennzeichnet, daß** als einer der mindestens zwei Prozeßparameter die Wirkleistung an der Werkzeugspindel als Stromdifferenz aus dem aktuellen Wirkstrom und dem Leerlaufstrom überwacht wird.

8.  Verfahren nach Anspruch 5, **dadurch gekennzeichnet, daß** als einer der mindestens zwei Prozeßparameter der Körperschall als Schwingungen an der Werkzeuglagerung überwacht wird.

9.  Verfahren nach Anspruch 5, **dadurch gekennzeichnet, daß** als einer der mindestens zwei Prozeßparameter die Dehnung von Bauteilen im Kraftfluß als Dehnungsschwingungen an der Werkzeuglagerung überwacht wird.

10. Verfahren nach einem der Ansprüche 8 oder 9, **dadurch gekennzeichnet, daß** das Verfahren die Verschleißerkennung an einem Fräswerkzeug betrifft und von den Körperschallschwingungen gemäß Anspruch 8 und/oder Dehnungsschwingungen gemäß Anspruch 9 ein oder mehrere spektrale Schmalbandanteile erfaßt werden, deren Mittenfrequenz der Stolleneingriffsfrequenz oder einem harmonischen Vielfachen der Stolleneingriffsfrequenz des Fräswerkzeugs entspricht.

11. Verfahren nach Anspruch 10, **dadurch gekennzeichnet, daß** ein spektraler Schmalbandanteil erfaßt wird, dessen Mittenfrequenz der dreifachen Stolleneingriffsfrequenz des Verzahnungswerkzeugs entspricht.

12. Verfahren nach einem der Ansprüche 10 oder 11, **dadurch gekennzeichnet, daß** das überwachte Fräswerkzeug ein Wälzfräser ist und die aktuellen Prozeßwerte zu den Prozeßparametern Körperschallschwingung gemäß Anspruch 8 und/oder Dehnungsschwingung gemäß Anspruch 9 und/oder Werkzeugspindelwirkleistung gemäß Anspruch 7 zu einem Zeitpunkt erfaßt wird, wenn sich der Wälzfräser in der Vollschnittphase befindet.

13. Verfahren nach einem der Ansprüche 1 bis 9, **dadurch gekennzeichnet, daß** das Verfahren die Verschleißerkennung an einem Wälzschleifwerkzeug betrifft.

14. Verfahren nach einem der Ansprüche 1 bis 13, **dadurch gekennzeichnet, daß** die Normierung des zu jedem Prozeßparameter erfaßten Prozeßwertes als prozentuale Abweichung zu dem zugehörigen Referenzprozeßwert für ein scharfes Werkzeug definiert ist.

15. Verfahren nach einem der Ansprüche 1 bis 14, **dadurch gekennzeichnet, daß** die Gewichtung der normierten, aktuell erfaßten Prozeßwerte derart erfolgt, daß die individuellen aktuellen Verschleißkennwerte mit zunehmendem Werkzeugverschleiß ansteigen und der Anstieg in einem Bereich, der den Zeitpunkt der Notwendigkeit des Nachschärfens des Werkzeugs angibt, besonders steil ist.

16. Verfahren nach Anspruch 15, **dadurch gekennzeichnet, daß** die Gewichtung der normierten, aktuell erfaßten Prozeßwerte mittels einer glockenförmigen Zugehörigkeitsfunktion erfolgt, deren maximale Steigung in den Bereich fällt, der den Zeitpunkt der Notwendigkeit des Nachschärfens des Werkzeugs angibt.

17. Verfahren nach einem der Ansprüche 1 bis 16, **dadurch gekennzeichnet, daß** die Gewichtung der normierten, aktuell erfaßten Prozeßwerte zu individuellen aktuellen Verschleißkennwerten führt, die zwischen den Werten "0" für ein scharfes Werkzeug und "1" für ein stumpfes Werkzeug liegen.

18. Verfahren nach einem der Ansprüche 1 bis 17, **dadurch gekennzeichnet, daß** die Gewichtung der normierten, aktuell erfaßten Prozeßwerte je nach überwachtem Prozeßparameter unterschiedlich erfolgt, so daß die jeweils erhaltenen individuellen, aktuellen Verschleißkennwerte unabhängig von dem überwachten Prozeßparameter in etwa übereinstimmen.

19. Verfahren nach einem der Ansprüche 1 bis 18, **dadurch gekennzeichnet, daß** die Schritte des Gewichtens und Ableitens im Wege einer Fuzzy-Klassifikation erfolgen.

20. Verfahren nach einem der Ansprüche 1 bis 19, **dadurch gekennzeichnet, daß** die Ableitung des gemeinsamen aktuellen Verschleißkennwertes fuzzy-logisch ermittelt wird aus den individuellen Verschleißkennwerten $\mu(m_1)$ bis $\mu(m_k)$ der überwachten Prozeßparameter $m_1$ bis $m_k$ gemäß folgender Formel:

$$\mu(m_1 \wedge m_2 \wedge \ldots \wedge m_k) \approx \frac{1}{1 + \frac{1}{k}\sum_{i=1}^{k}\frac{1-\mu(m_i)}{\mu(m_i)}}$$

21. Verfahren gemäß Anspruch 1, **dadurch gekennzeichnet, daß** die Schritte des Gewichtens und Ableitens mittels neuronalen Netzen durchgeführt werden.

22. Verfahren nach einem der Ansprüche 1 bis 21, **dadurch gekennzeichnet, daß** die aktuell erfaßten Prozeßwerte vor ihrer Normierung durch Mittelwertbildung mit zuvor für denselben Prozeßparameter ermittelten Prozeßwerten geglättet wird.

23. Verfahren nach Anspruch 22, **dadurch gekennzeichnet, daß** im Falle der Überwachung eines Wälzfräswerkzeugs zur Mittelwertbildung die über eine gesamte vorangegangene Shiftperiode erfaßten Prozeßwerte berücksichtigt werden.

24. Verzahnungsvorrichtung, die einen Antrieb (3) für ein Verzahnungswerkzeug (2), eine Werkstückaufnahme (4, 5) zur Fixierung eines Werkstücks (1) und eine Werkzeugverschleißüberwachungseinrichtung umfaßt, wobei die Werkzeugverschleißüberwachungsvorrichtung Sensoren (6, 7) zum Erfassen von aktuellen Prozeßwerten zu mindestens zwei unterschiedlichen zu überwachenden Prozeßparametern eines Verzahnungsprozesses und desweiteren eine Datenverarbeitungseinrichtung aufweist, mit Mitteln zum Normieren der von den Sensoren jeweils aktuell erfaßten Prozeßwerte, indem jeder aktuell erfaßte Prozeßwert zu einem Referenzprozeßwert in Beziehung gesetzt wird, der zu dem jeweils überwachten Prozeßparameter für ein scharfes Werkzeug erfaßt wurde, und mit Mitteln zum Gewichten der so normierten, aktuell erfaßten Prozeßwerte, so daß zu jedem überwachten Prozeßparameter ein individueller, aktueller Verschleißkennwert erhalten wird, der auf den Werkzeugverschleiß schließen läßt, und mit Mitteln zum Ableiten eines gemeinsamen aktuellen Verschleißkennwerts für die Prozeßparametergruppe aus den so erhaltenen individuellen aktuellen Verschleißkennwerten.

25. Verzahnungsvorrichtung nach Anspruch 24, **gekennzeichnet durch** eine Anzeigeneinrichtung, mit der die zeitliche Entwicklung des gemeinsamen aktuellen Verschleißkennwertes als Verschleißkennwertkurve angezeigt wird.

26. Verzahnungsvorrichtung nach einem der Ansprüche 24 oder 25, **dadurch gekennzeichnet, daß** die mindestens zwei überwachten Prozeßparameter ausgewählt sind aus der Gruppe folgender vier besonderer Prozeßparameter: Temperaturerwärmung, Körperschall, Dehnung von Bauteilen im Kraftfluß, Wirkleistung an der Werkzeugspindel.

27. Verzahnungsvorrichtung nach Anspruch 26, **gekennzeichnet durch** Sensoren zum Erfassen der Temperaturerwärmung des Werkstücks als Differenz zwischen Werkstücktemperatur vor und nach dessen Bearbeitung.

28. Verzahnungsvorrichtung nach Anspruch 26, **gekennzeichnet durch** eine Einrichtung zum Erfassen der Wirkleistung an der Werkzeugspindel als Stromdifferenz aus dem aktuellen Wirkstrom und dem Leerlaufstrom.

29. Verzahnungsvorrichtung nach Anspruch 26, **gekennzeichnet durch** Sensoren zum Erfassen des Körperschalls als Schwingungen an der Werkstücklagerung.

30. Verzahnungsvorrichtung nach Anspruch 26, **gekennzeichnet durch** Sensoren zum Erfassen der Dehnung von Bauteilen im Kraftfluß als Dehnungsschwingungen an der Werkstücklagerung.

31. Verzahnungsvorrichtung nach einem der Ansprüche 29 oder 30, **dadurch gekennzeichnet, daß** die Verzahnungsvorrichtung eine Fräsmaschine ist und daß ein Schmalbandfilter vorgesehen ist, um aus den erfaßten Körperschallschwingungen gemäß Anspruch 29 und/oder Dehnungsschwingungen gemäß Anspruch 30 lediglich ein oder mehrere spektrale Schmalbandanteile auszufiltern, deren Mittenfrequenz der Stolleneingriffsfrequenz oder einem harmonischen Vielfachen der Stolleneingriffsfrequenz des Fräswerkzeugs entspricht.

32. Verzahnungsvorrichtung nach Anspruch 31, **dadurch gekennzeichnet, daß** der Schmalbandfilter einen spektralen Schmalbandanteil ausfiltert, dessen Mittenfrequenz der dreifachen Stolleneingriffsfrequenz des Fräswerkzeugs entspricht.

33. Verzahnungsvorrichtung nach einem der Ansprüche 31 oder 32, **dadurch gekennzeichnet, daß** die Fräsmaschine eine Wälzfräsmaschine ist und eine Steuerung vorgesehen ist, um die aktuellen Prozeßwerte zu den Prozeßparametern Körperschall gemäß Anspruch 29 und/oder Dehnung gemäß Anspruch 30 und/oder Werkzeugspindelwirkleistung gemäß Anspruch 28 zu einem Zeitpunkt zu erfassen, wenn sich der Wälzfräser in der Vollschnittphase befindet.

34. Verzahnungsvorrichtung nach einem der Ansprüche 24 bis 30, **dadurch gekennzeichnet, daß** die Verzahnungsvorrichtung eine Wälzschleifmaschine ist.

35. Verzahnungsvorrichtung nach einem der Ansprüche 24 bis 34, **dadurch gekennzeichnet, daß** die Mittel zum Gewichten der normierten, aktuell erfaßten Prozeßwerte individuelle aktuelle Verschleißkennwerte zur Verfügung stellen, die mit zunehmendem Werkzeugverschleiß ansteigen, wobei der Anstieg in einem Bereich, der den Zeitpunkt der Notwendigkeit des Nachschärfens des Werkzeugs angibt, besonders steil ist.

36. Verzahnungsvorrichtung nach Anspruch 35, **dadurch gekennzeichnet, daß** die Mittel zum Gewichten der normierten, aktuell erfaßten Prozeßwerte eine Verknüpfung der Prozeßwerte mit einer glockenförmigen Zugehörigkeitsfunktion durchführen, welche in der Datenverarbeitungseinrichtung gespeichert ist.

**37.** Verzahnungsvorrichtung nach einem der Ansprüche 24 bis 36, **dadurch gekennzeichnet, daß** die Mittel zum Gewichten der normierten, aktuell erfaßten Prozeßwerte individuelle aktuelle Verschleißkennwerte zur Verfügung stellen, die zwischen den Werten "0" für ein scharfes Werkzeug und "1" für ein stumpfes Werkzeug liegen.

**38.** Verzahnungsvorrichtung nach einem der Ansprüche 36 oder 37, **dadurch gekennzeichnet, daß** die Mittel zum Gewichten der normierten, aktuell erfaßten Prozeßwerte je nach überwachtem Prozeßparameter eine Verknüpfung mit unterschiedlichen Zugehörigkeitsfunktionen durchführt, so daß die jeweils erhaltenen individuellen, aktuellen Verschleißkennwerte unabhängig von dem überwachten Prozeßparameter in etwa übereinstimmen.

**39.** Verzahnungsvorrichtung nach einem der Ansprüche 24 bis 37, **dadurch gekennzeichnet, daß** die Mittel zum Gewichten und Ableiten als Fuzzy-Klassifikationssystem ausgebildet sind.

**40.** Verzahnungsvorrichtung gemäß Anspruch 24, **dadurch gekennzeichnet, daß** die Mittel zum Gewichten und Ableiten neuronale Netze umfassen.

**41.** Verzahnungsvorrichtung nach einem der Ansprüche 24 bis 40, **gekennzeichnet durch** Mittel zum Glätten der aktuell erfaßten Prozeßwerte vor ihrer Normierung **durch** Mittelwertbildung mit zuvor für denselben Prozeßparameter ermittelten Prozeßwerten.

## Claims

**1.** A method for in-process wear detection on a gear cutting tool comprising the following steps:

- monitoring a group of at least two process parameters of a gear cutting process,
- detecting at least one current process value for each process parameter of said process parameter group,
- normalizing the currently detected process values by relating each currently detected process value to a reference process value detected for the particular monitored process parameter for a sharp tool,
- weighting the normalized currently detected process values to obtain for each monitored process value an individual current wear characteristic value indicating the tool wear,
- deriving a common current wear characteristic value for the process parameter group using the individual current wear characteristic values.

**2.** A method according to claim 1, **characterized by** the further step of plotting the time development of the common current wear characteristic value as a wear characteristic value curve.

**3.** A method according to claim 1 or 2, **characterized by** the further step of detecting the end of service life of the gear cutting tool when the common current wear value is above a given threshold value.

**4.** A method according to claim 2, **characterized by** the further step of detecting the end of service life by the gradient of said wear characteristic value curve.

**5.** A method according to any of claims 1 to 4, **characterized in that** the at least two monitored process parameters are selected from the group of the following four special process parameters: temperature increase, structure-borne sound, elongation of components in the force flux, effective power on the tool spindle.

**6.** A method according to claim 5, **characterized in that** the temperature increase of the workpiece is monitored as one of the at least two process parameters as the difference between workpiece temperature before and after machining.

**7.** A method according to claim 5, **characterized in that** the effective power on the tool spindle is monitored as one of the at least two process parameters as the current difference from the current active current and the idle current.

**8.** A method according to claim 5, **characterized in that** the structure-borne sound is monitored as one of the at least two process parameters as oscillations on the tool mounting.

**9.** A method according to claim 5, **characterized in that** the elongation of components in the force flux is monitored as one of the at least two process parameters as extensional oscillations on the tool mounting.

**10.** A method according to either of claims 8 and 9, **characterized in that** the method relates to wear detection on a milling tool, and one or more narrow band spectral components are detected from the structure-borne sound oscillations according to claim 8 and/or extensional oscillations according to claim 9, the center frequency of said spectral components corresponding to the tooth meshing frequency or a harmonic multiple of the tooth meshing frequency of the milling tool.

**11.** A method according to claim 10, **characterized in that** a narrow band spectral component is detected whose center frequency corresponds to three times the tooth meshing frequency of the gear cutting tool.

**12.** A method according to either of claims 10 and 11, **characterized in that** the monitored milling tool is a hob cutter and the current process values for the process parameters, structure-borne sound oscillation according to claim 8 and/or extensional oscillation according to claim 9 and/or tool spindle effective power according to claim 7, are detected at a time when the hob cutter is in the full cutting phase.

**13.** A method according to any of claims 1 to 9, **characterized in that** the method relates to wear detection on a gear grinding tool.

**14.** A method according to any of claims 1 to 13, **characterized in that** the normalization of the process value detected for each process parameter is defined as a percentage deviation from the associated reference process value for a sharp tool.

**15.** A method according to any of claims 1 to 14, **characterized in that** the weighting of the normalized currently detected process values is done such that the individual current wear characteristic values rise with increasing tool wear and the rise is especially steep in an area stating the time when it is necessary to resharpen the tool.

**16.** A method according to claim 15, **characterized in that** the weighting of the normalized currently detected process values is done by means of a bell membership function whose maximum slope falls within the area stating the time when it is necessary to resharpen the tool.

**17.** A method according to any of claims 1 to 16, **characterized in that** the weighting of the normalized currently detected process values leads to individual current wear characteristic values that are between the values "0" for a sharp tool and "1" for a blunt tool.

**18.** A method according to any of claims 1 to 17, **characterized in that** the weighting of the normalized currently detected process values is done differently depending on the monitored process parameter, so that the particular obtained individual current wear characteristic values roughly match regardless of the monitored process parameter.

**19.** A method according to any of claims 1 to 18, **characterized in that** the steps of weighting and deriving are done by way of fuzzy classification.

**20.** A method according to any of claims 1 to 19, **characterized in that** the derivation of the common current wear characteristic value is determined by fuzzy logic from the individual wear characteristic values $\mu(m_1)$ to $\mu(m_k)$ of the monitored process parameters $m_1$ to $m_k$ according to the following formula:

.

$$\mu(m_1 \wedge m_2 \wedge \ldots \wedge m_k) = \frac{1}{1 + \frac{1}{k}\sum_{i=1}^{k} \frac{1 - \mu(m_i)}{\mu(m_i)}}$$

**21.** A method according to claim 1, **characterized in that** the steps of weighting and deriving are performed by means of neural networks.

**22.** A method according to any of claims 1 to 21, **characterized in that** the currently detected process values are smoothed before their normalization by averaging with process values previously determined for the same process parameter.

23. A method according to claim 22, **characterized in that** when a gear hobbing tool is monitored, the process values detected over a total previous shift period are taken into account for averaging.

24. A gear cutting apparatus comprising a drive (3) for a gear cutting tool (2), a workpiece receiving means (4, 5) for fixing a workpiece (1) and a tool wear monitoring device, the tool wear monitoring apparatus having sensors (6, 7) for detecting current process values for at least two different process parameters to be monitored for a gear cutting process, and further a data processing device, having means for normalizing the particular process values currently detected by the sensors by relating each currently detected process value to a reference process value that was detected for the particular monitored process parameter for a sharp tool, and having means for weighting the thus normalized currently detected process values, so that for each monitored process parameter an individual current wear characteristic value is obtained that indicates the tool wear, and having means for deriving a common current wear characteristic value for the process parameter group from the thus obtained individual current wear characteristic values.

25. A gear cutting apparatus according to claim 24, **characterized by** a display device for displaying the time development of the common current wear characteristic value as a wear characteristic value curve.

26. A gear cutting apparatus according to either of claims 24 and 25, **characterized in that** the at least two monitored process parameters are selected from the group of the following four special process parameters: temperature increase, structure-borne sound, elongation of components in the force flux, effective power on the tool spindle.

27. A gear cutting apparatus according to claim 26, **characterized by** sensors for detecting the temperature increase of the workpiece as the difference between workpiece temperature before and after the machining thereof.

28. A gear cutting apparatus according to claim 26, **characterized by** a device for detecting the effective power on the tool spindle as the current difference from the current active current and the idle current.

29. A gear cutting apparatus according to claim 26, **characterized by** sensors for detecting the structure-borne sound as oscillations on the workpiece mounting.

30. A gear cutting apparatus according to claim 26, **characterized by** sensors for detecting the elongation of components in the force flux as extensional oscillations on the workpiece mounting.

31. A gear cutting apparatus according to either of claims 29 and 30, **characterized in that** the gear cutting apparatus is a milling machine, and a narrow band filter is provided for filtering out of the detected structure-borne sound oscillations according to claim 29 and/or extensional oscillations according to claim 30 only one or more narrow band spectral components whose center frequency corresponds to the tooth meshing frequency or a harmonic multiple of the tooth meshing frequency of the milling tool.

32. A gear cutting apparatus according to claim 31, **characterized in that** the narrow band filter filters out a narrow band spectral component whose center frequency corresponds to three times the tooth meshing frequency of the milling tool.

33. A gear cutting apparatus according to either of claims 31 and 32, **characterized in that** the milling machine is a gear hobbing machine, and a control means is provided for detecting the current process values for the process parameters, structure-borne sound according to claim 29 and/or elongation according to claim 30 and/or tool spindle effective power according to claim 28, at a time when the hob cutter is in the full cutting phase.

34. A gear cutting apparatus according to any of claims 24 to 30, **characterized in that** the gear cutting apparatus is a gear grinding machine.

35. A gear cutting apparatus according to any of claims 24 to 34, **characterized in that** the means for weighting the normalized currently detected process values provide individual current wear characteristic values that rise with increasing tool wear, the rise being especially steep in an area stating the time when it is necessary to resharpen the tool.

**36.** A gear cutting apparatus according to claim 35, **characterized in that** the means for weighting the normalized currently detected process values perform an operation on the process values with a bell membership function stored in the data processing device.

**37.** A gear cutting apparatus according to any of claims 24 to 36, **characterized in that** the means for weighting the normalized currently detected process values provide individual current wear characteristic values that are between the values "0" for a sharp tool and "1" for a blunt tool.

**38.** A gear cutting apparatus according to either of claims 36 and 37, **characterized in that** the means for weighting the normalized currently detected process values perform an operation with different membership functions depending on the monitored process parameter, so that the particular obtained individual current wear characteristic values roughly match regardless of the monitored process parameter.

**39.** A gear cutting apparatus according to any of claims 24 to 37, **characterized in that** the weighting and deriving means are formed as a fuzzy classification system.

**40.** A gear cutting apparatus according to claim 24, **characterized in that** the weighting and deriving means include neural networks.

**41.** A gear cutting apparatus according to any of claims 24 to 40, **characterized by** means for smoothing the currently detected process values before their normalization by averaging with process values previously determined for the same process parameter.

**Revendications**

**1.** Procédé pour détecter au cours de processus l'usure sur un outil denté comprenant les étapes suivantes consistant à :

- surveiller un groupe d'au moins deux paramètres d'un processus faisant intervenir un outil denté,
- acquérir au moins une valeur actuelle de processus pour chaque paramètre de ce groupe de paramètres,
- normaliser des valeurs acquises actuellement en créant une relation entre chaque valeur de processus actuellement acquise et une valeur de processus de référence qui a été acquise pour chaque paramètre surveillé pour un outil tranchant,
- pondérer des valeurs de processus normalisées, actuellement acquises afin d'obtenir pour chaque valeur de processus surveillée une caractéristique d'usure individuelle et actuelle qui révèle l'usure de l'outil,
- déduire une caractéristique d'usure commune actuelle pour le groupe de paramètres en utilisant les caractéristiques d'usure individuelles actuelles.

**2.** Procédé selon la revendication 1, **caractérisé par** l'étape supplémentaire consistant à enregistrer le développement au cours du temps de la caractéristique d'usure commune actuelle sous forme d'une courbe de caractéristique d'usure.

**3.** Procédé selon la revendication 1 ou 2, **caractérisé par** l'étape supplémentaire consistant à détecter la fin de la durée de vie de l'outil denté lorsque la valeur d'usure commune actuelle est située en dehors d'une valeur de seuil prédéfinie.

**4.** Procédé selon la revendication 2, **caractérisé par** l'étape supplémentaire consistant à détecter la fin de la durée de vie à l'aide du gradient de la courbe de caractéristique d'usure.

**5.** Procédé selon une des revendications 1 à 4, **caractérisé en ce que** les au moins deux paramètres surveillés sont sélectionnés parmi le groupe des quatre paramètres particuliers suivants : augmentation de la température, bruit du corps, dilatation d'éléments dans le flux de force, puissance effective au niveau de la broche de l'outil.

**6.** Procédé selon la revendication 5, **caractérisé en ce que** l'un des au moins deux paramètres surveillés est l'augmentation de la température de la pièce à usiner définie comme la différence entre la température de la pièce à usiner avant et après l'usinage.

**7.** Procédé selon la revendication 5, **caractérisé en ce que** l'un des au moins deux paramètres surveillés est la puissance effective au niveau de la broche de l'outil définie comme la différence d'intensité entre le courant effectif actuel et le courant à vide.

**8.** Procédé selon la revendication 5, **caractérisé en ce que** l'un des au moins deux paramètres surveillés est le bruit du corps défini comme les vibrations au niveau du logement de l'outil.

**9.** Procédé selon la revendication 5, **caractérisé en ce que** l'un des au moins deux paramètres surveillés est la dilatation d'éléments dans le flux de force définie comme des vibrations de dilatation au niveau du logement de l'outil.

**10.** Procédé selon une des revendications 8 ou 9, **caractérisé en ce que** le procédé concerne la détection d'usure sur un outil de fraisage et **en ce que**, à l'aide des vibrations de bruit du corps selon la revendication 8 et/ou des vibrations de dilatation selon la revendication 9, il est acquis une ou plusieurs parties de spectre à bande étroite dont la fréquence moyenne correspond à la fréquence d'attaque des dents ou à une harmonique d'ordre supérieur de la fréquence d'attaque des dents de l'outil de fraisage.

**11.** Procédé selon la revendication 10, **caractérisé en ce qu'**il est acquis une partie de spectre à bande étroite dont la fréquence moyenne correspond au triple de la fréquence d'attaque des dents de l'outil denté.

**12.** Procédé selon une des revendications 10 ou 11, **caractérisé en ce que** l'outil de fraisage surveillé est une fraise-mère développante et **en ce que** les valeurs de processus actuelles relatives aux paramètres de processus, vibrations du bruit du corps selon la revendication $ et/ou vibrations de dilatation selon la revendication 9 et/ou puissance effective de la broche de l'outil selon la revendication 7, sont acquises à un moment où la fraise-mère développante se trouve en phase d'usinage dans la masse.

**13.** Procédé selon une des revendications 1 à 9, **caractérisé en ce que** le procédé concerne la détection d'usure sur un outil à rectifier par développante.

**14.** Procédé selon une des revendications 1 à 13, **caractérisé en ce que** la normalisation de la valeur de processus acquise pour chaque paramètre est définie comme une divergence proportionnelle à la valeur de processus de référence associée pour un outil tranchant.

**15.** Procédé selon une des revendications 1 à 14, **caractérisé en ce que** les valeurs de processus acquises actuellement et normalisées sont pondérées de façon que les caractéristiques d'usure individuelles actuelles augmentent lorsque l'usure de l'outil augmente et que l'augmentation est particulièrement importante dans une zone qui indique le moment où il est nécessaire de réaiguiser l'outil.

**16.** Procédé selon la revendication 15, **caractérisé en ce que** les valeurs de processus acquises actuellement et normalisées sont pondérées au moyen d'une fonction d'appartenance en forme de cloche dont la pente maximale est située dans la zone qui indique le moment où il est nécessaire de réaiguiser l'outil.

**17.** Procédé selon une des revendications 1 à 16, **caractérisé en ce que** la pondération des valeurs de processus acquises actuellement et normalisées aboutit à des caractéristiques d'usure individuelles actuelles qui sont situées entre les valeurs "0" pour un outil tranchant et "1" pour un outil émoussé.

**18.** Procédé selon une des revendications 1 à 17, **caractérisé en ce que** les valeurs de processus acquises actuellement et normalisées sont pondérées différemment selon le paramètre surveillé de sorte que les caractéristiques d'usure actuelles, individuelles obtenues, correspondent à peu près, quel que soit le paramètre surveillé.

**19.** Procédé selon une des revendications 1 à 18, **caractérisé en ce que** les étapes de pondération et de déduction sont réalisées au cours d'une classification floue.

**20.** Procédé selon une des revendications 1 à 14, **caractérisé en ce que** la déduction de la caractéristique d'usure actuelle commune est déterminée à l'aide d'une logique floue à partir des caractéristiques d'usure individuelles $\mu(m_1)$ à $\mu(m_k)$ des paramètres de processus surveillés $m_1$ à $m_k$ selon la formule suivante :

$$\mu(m_1 \wedge m_2 \wedge \ldots \wedge m_k) = \frac{1}{1 + \frac{1}{k} \sum_{i=1}^{k} \frac{1 - \mu(m_i)}{\mu(m_i)}}$$

21. Procédé selon la revendication 1, **caractérisé en ce que** les étapes de pondération et de déduction sont exécutées au moyen de réseaux neuronaux.

22. Procédé selon une des revendications 1 à 21, **caractérisé en ce que** les valeurs de processus actuellement acquises sont lissées avant leur normalisation en formant la valeur moyenne avec des valeurs de processus déterminées auparavant pour le même paramètre.

23. Procédé selon la revendication 22, **caractérisé en ce que**, dans le cas de la surveillance d'une fraise-mère développante, les valeurs de processus acquises pendant une période complète du poste de travail précédent sont prises en compte pour former la valeur moyenne.

24. Dispositif faisant intervenir des outils dentés, qui comprend un entraînement (3) pour un outil denté (2), un logement de pièce à usiner (4, 5) destiné à fixer une pièce à usiner (1) et un système de surveillance d'usure d'outil, dans lequel le système de surveillance d'usure d'outil présente des capteurs (6, 7) destinés à acquérir des valeurs de processus actuelles relatives à au moins deux paramètres différents à surveiller d'un processus faisant intervenir des outils dentés, et en plus un système de traitement de données, avec des moyens pour normaliser les valeurs de processus acquises actuellement par les capteurs en créant une relation entre chaque valeur de processus acquise actuellement et une valeur de processus de référence qui a été acquise relativement aux paramètres surveillés pour un outil tranchant, et avec des moyens pour pondérer les valeurs de processus acquises actuellement ainsi normalisées de sorte que l'on obtienne pour chaque paramètre surveillé une caractéristique d'usure individuelle actuelle qui révèle l'usure de l'outil, et avec des moyens pour déduire une caractéristique d'usure commune actuelle pour le groupe de paramètres à partir des caractéristiques d'usure actuelles individuelles ainsi obtenues.

25. Dispositif faisant intervenir des outils dentés selon la revendication 24, **caractérisé par** un système d'affichage avec lequel est affiché le développement en fonction du temps de la courbe de la caractéristique d'usure commune actuelle.

26. Dispositif faisant intervenir des outils dentés selon une des revendications 24 ou 25, **caractérisé en ce que** les au moins deux paramètres surveillés sont sélectionnés parmi le groupe des quatre paramètres de processus particuliers suivants : augmentation de la température, bruit du corps, dilatation d'éléments dans le flux de force, puissance effective au niveau de la broche de l'outil.

27. Dispositif faisant intervenir des outils dentés selon la revendication 26, **caractérisé par** des capteurs destinés à acquérir l'augmentation de la température de la pièce à usiner définie comme la différence entre la température de la pièce à usiner avant et après son usinage.

28. Dispositif faisant intervenir des outils dentés selon la revendication 26, **caractérisé par** un système destiné à acquérir la puissance effective au niveau de la broche de l'outil définie comme la différence d'intensité entre le courant effectif actuel et le courant à vide.

29. Dispositif faisant intervenir des outils dentés selon la revendication 26, **caractérisé par** des capteurs destinés à acquérir le bruit du corps défini comme des vibrations au niveau du logement de la pièce à usiner.

30. Dispositif faisant intervenir des outils dentés selon la revendication 26, **caractérisé par** des capteurs destinés à acquérir la dilatation d'éléments dans le flux de force définie comme des vibrations de dilatation au niveau du logement de la pièce à usiner.

31. Dispositif faisant intervenir des outils dentés selon une des revendications 29 ou 30, **caractérisé en ce que** le dispositif faisant intervenir des outils dentés est une machine à fraiser et **en ce qu'**il est prévu un filtre à bande étroite afin de filtrer parmi les vibrations de bruit du corps acquises selon la revendication 29 et/ou les vibrations de dilatation selon la revendication 30 seulement une ou plusieurs parties de spectre à bande étroite dont la fréquence moyenne correspond à la fréquence d'attaque des dents ou à une harmonique d'ordre supérieur de la fréquence d'attaque des dents de l'outil de fraisage.

**32.** Dispositif faisant intervenir des outils dentés selon la revendication 31, **caractérisé en ce que** le filtre à bande étroite filtre une partie spectrale à bande étroite dont la fréquence moyenne correspond au triple de la fréquence d'attaque des dents de l'outil de fraisage.

**33.** Dispositif faisant intervenir des outils dentés selon une des revendications 31 ou 32, **caractérisé en ce que** la machine à fraiser est une fraise-mère développante et **en ce qu'**il est prévu un automate afin d'acquérir les valeurs de processus actuelles pour les paramètres, bruit du corps selon la revendication 29 et/ou dilatation selon la revendication 30 et/ou puissance effective de la broche de l'outil selon la revendication 28, à un moment où la fraise-mère développante se trouve en phase d'usinage dans la masse.

**34.** Dispositif faisant intervenir des outils dentés selon une des revendications 24 à 30 **caractérisé en ce que** le dispositif faisant intervenir des outils dentés est une machine à rectifier par développante.

**35.** Dispositif faisant intervenir des outils dentés selon une des revendications 24 à 34, **caractérisé en ce que** les moyens pour pondérer les valeurs de processus acquises actuellement et normalisées mettent à disposition des caractéristiques d'usure individuelles actuelles qui augmentent lorsque l'usure de l'outil augmente, l'augmentation étant particulièrement importante dans une zone qui indique le moment où il est nécessaire de réaiguiser l'outil.

**36.** Dispositif faisant intervenir des outils dentés selon la revendication 35, **caractérisé en ce que** les moyens pour pondérer les valeurs de processus acquises actuellement et normalisées combinent les valeurs de processus à une fonction d'appartenance en forme de cloche, laquelle fonction est enregistrée dans le système de traitement de données.

**37.** Dispositif faisant intervenir des outils dentés selon une des revendications 24 à 36, **caractérisé en ce que** les moyens pour pondérer les valeurs de processus acquises actuellement et normalisées mettent à disposition des caractéristiques d'usure individuelles actuelles qui sont situées entre les valeurs "0" pour un outil tranchant et "1" pour un outil émoussé.

**38.** Dispositif faisant intervenir des outils dentés selon une des revendications 36 ou 37, **caractérisé en ce que** les moyens pour pondérer les valeurs de processus acquises actuellement et normalisées exécutent, selon le paramètre surveillé, une combinaison avec différentes fonctions d'appartenance de sorte que les caractéristiques d'usure actuelles individuelles obtenues correspondent à peu près, quel que soit le paramètre surveillé.

**39.** Dispositif faisant intervenir des outils dentés selon une des revendications 24 à 37, **caractérisé en ce que** les moyens destinés à la pondération et la déduction se présentent sous la forme d'un système de classification floue.

**40.** Dispositif faisant intervenir des outils dentés selon la revendication 24, **caractérisé en ce que** les moyens destinés à la pondération et la déduction comprennent des réseaux neuronaux.

**41.** Dispositif faisant intervenir des outils dentés selon une des revendications 24 à 40, **caractérisé par** des moyens destinés à lisser, avant leur normalisation, les valeurs de processus acquises actuellement en formant une valeur moyenne avec des valeurs de processus déterminées auparavant pour le même paramètre.

Fig. 1

Fig. 2

18

Fig. 3

Fig.4

Fig.5